(19) Europäisches Patentamt
European Patent Office
Office européen des brevets

(11) EP 2 931 863 B1

(12) # EUROPÄISCHE PATENTSCHRIFT

(45) Veröffentlichungstag und Bekanntmachung des Hinweises auf die Patenterteilung:
**21.02.2018 Patentblatt 2018/08**

(21) Anmeldenummer: **13802059.9**

(22) Anmeldetag: **10.12.2013**

(51) Int Cl.:
***C11D 3/37*** (2006.01) ***C08F 226/10*** (2006.01)

(86) Internationale Anmeldenummer:
**PCT/EP2013/076018**

(87) Internationale Veröffentlichungsnummer:
**WO 2014/090769 (19.06.2014 Gazette 2014/25)**

(54) **DIE PRIMÄRWASCHKRAFT VERBESSERNDE POLYMERE WIRKSTOFFE**

POLYMER ACTIVE INGREDIENTS WHICH IMPROVE PRIMARY DETERGENT POWER

PRINCIPES ACTIFS POLYMÈRES AMÉLIORANT LE POUVOIR DÉTERGENT PRIMAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2012 DE 102012024442**

(43) Veröffentlichungstag der Anmeldung:
**21.10.2015 Patentblatt 2015/43**

(73) Patentinhaber:
- **Henkel AG & Co. KGaA**
  **40589 Düsseldorf (DE)**
- **Fraunhofer-ges. zur Förderung der Angewandten Forschung E.V.**
  **80686 München (DE)**

(72) Erfinder:
- **PLATH, Nicole**
  **40212 Düsseldorf (DE)**
- **LUNEAU, Benoit**
  **40885 Ratingen (DE)**
- **VOCKENROTH, Inga Kerstin**
  **40597 Düsseldorf (DE)**
- **LASCHEWSKY, André**
  **14469 Potsdam (DE)**
- **WISCHERHOFF, Erik**
  **14469 Potsdam (DE)**
- **PÄCH, Michael**
  **14471 Potsdam (DE)**

(56) Entgegenhaltungen:
**EP-A1- 0 631 008**
**WO-A1-03/039499**
**DE-A1- 4 235 798**
**US-A1- 2006 052 269**
**US-A1- 2008 242 584**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 931 863 B1

**Beschreibung**

Die vorliegende Erfindung betrifft die Verwendung bestimmter Polymere zur Verstärkung der Primärwaschkraft von Wasch- oder Reinigungsmitteln beim Waschen von Textilien oder Reinigen harter Oberflächen gegenüber insbesondere bleich- oder enzymsensitiven Anschmutzungen, und Wasch- und Reinigungsmittel, welche derartige Polymere enthalten.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Farbübertragungsinhibitoren umfassen. Zu derartigen Hilfsstoffen gehören auch Substanzen, deren Anwesenheit die Waschkraft von Tensiden verstärkt, ohne dass sie in der Regel selbst ein ausgeprägtes tensidisches Verhalten aufzuweisen müssen. Gleiches gilt sinngemäß auch für Reinigungsmittel für harte Oberflächen. Derartige Substanzen werden oft als Waschkraftverstärker bezeichnet.

Der Einsatz von Poly-(N-vinylpyrrolidon) in Waschmitteln ist bekannt. So beschreibt zum Beispiel die internationale Patentanmeldung WO 2011/001173 A1 Flüssigwaschmittel, die 0,01 bis 5 Gew.-% Cellulase und 0,01 bis 5 Gew.-% Poly-(N-vinylpyrrolidon) und/oder dessen Salz mit einem mittleren Molekulargewicht von 20000 g/mol bis 60000 g/mol enthalten.

Aus der internationalen Patentanmeldung WO 97/29139 A1 sind vernetzte Polymere aus 10 bis 50 Gew.-% N-Vinylcaprolactam und 50 bis 90 Gew.-% N-Vinylpyrrolidon bekannt, die in Gegenwart von 0,5 bis 7 Gew.-% eines Vernetzers, der auch in situ erzeugtes 1-Vinyl-3(E)-ethylidenpyrrolidon sein kann, hergestellt werden können. Derartige vernetzte Polymere sind wie dort beschrieben zum Herausfiltern von Polyphenolen aus Bier geeignet.

Die soil-release-Wirkung von N-Vinylcaprolactam-Homopolymeren und -Copolymeren mit untergeordneten Mengen an anderen Monomeren wie beispielsweise N-Vinylpyrrolidon ist aus der europäischen Patentanmeldung EP 0 181 204 A2 bekannt. Aus der europäischen Patentanmeldung EP 0 181 205 A2 ist bekannt, dass solche Polymere zum Erzielen des soil-release-Effekts auch als Umhüllungsmaterialien auf Fasern, insbesondere aus Polyester, aufgebracht werden können.

Aus der US-amerikanischen Patentanmeldung US 2002/0177542 sind Waschmittel bekannt, die eine soil-relase-Effekt-aufweisende und gewebeweichmachende Menge an N-Vinylcaprolactam-Homopolymer mit einem K-Wert von mindestens 40 enthalten.

Die internationale Patentanmeldung WO 2004/014326 A1 beschreibt aniontensidhaltige Haarwaschmittel, die Amino- und Hydroxygruppen aufweisende Silikonderivate und wasserlösliche kationische Polymere mit mittlerem Molekulargewicht von 100000 g/mol bis 2000000 g/mol und Ladungsdichten von 0,6 bis 4 meq/g enthalten, wobei unter diesen auch N-vinylpyrrolidon/Alkylaminoacrylat/N-Vinylcaprolactam-Copolymere genannt werden, und die dort wegen ihres konditionierenden Effekts eingesetzt werden.

Überraschenderweise wurde gefunden, dass bestimmte Copolymere des N-Vinylpyrrolidons, welche die Oberflächenspannung wässriger Aniontensid-Lösungen erhöhen, besonders gute die Primärwaschkraft verstärkende Eigenschaften haben.

Gegenstand der Erfindung ist die Verwendung von durch Copolymerisation von N-Vinylpyrrolidon mit ethylenisch ungesättigten Verbindungen, die eine Amidfunktion aufweisen, erhältlichen Polymeren, die einen - unten näher beschriebenen - Aggregationsparameter $X_{ag}$ mit $X_{ag}$ > 1 mN/m, vorzugsweise > 2,5 mN/m und insbesondere im Bereich von 3 mN/m bis 5 mN/m aufweisen, zur Verstärkung der Primärwaschkraft von Wasch- oder Reinigungsmitteln beim Waschen von Textilien oder beim Reinigen harter Oberflächen gegenüber insbesondere bleich- oder enzymsensitiven Anschmutzungen.

Der polymere Wirkstoff wird ausgewählt aus den durch radikalische Copolymerisation des ersten Monomers N-Vinylpyrrolidon mit einem zweiten Monomer, welches ein- oder mehrfach ethylenisch ungesättigt ist und eine Amidfunktion trägt, erhältlichen Copolymeren. Das genannte zweite Monomer wird vorzugsweise ausgewählt aus der Gruppe umfassend Acrylamid, Methacrylamid, N-Alkylacrylamid, N-Alkylmethacrylamid, N,N-Dialkylacrylamid und N,N-Dialkylmethacrylamid, in denen die Alkylgruppen 1 bis 10 C-Atome, insbesondere 1 bis 4 C-Atome aufweisen, sowie Mischungen aus mindestens 2 dieser Verbindungen. Besonders bevorzugt ist N,N-Dimethylacrylamid.

Die erfindungsgemäß einzusetzenden Polymere oder Copolymere können gegebenenfalls, beispielsweise durch die Anwesenheit eines 2- oder mehrfach, insbesondere 2-fach ethylenisch ungesättigten Monomers bei der Polymerisation, vernetzt vorliegen. Zu den in Frage kommenden 2- oder mehrfach ethylenisch ungesättigten Monomeren (Vernetzungsmonomeren) gehören insbesondere Verbindungen der allgemeinen Formeln (I), (II), (III), (IV) oder (V)

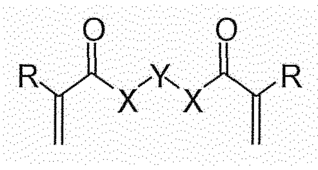 (I)

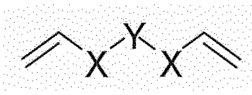 (II)

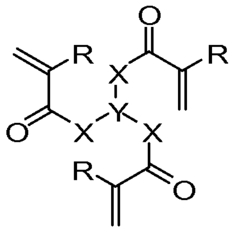 (III)

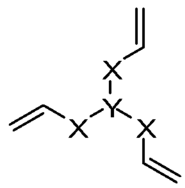 (IV)

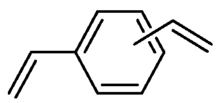 (V)

in denen R für H oder einen $C_{1-6}$-Alkylrest, insbesondere einen Methylrest,
X für O oder NH,
Y für Cyclohexyl, Phenyl, $-(CR^1R^2)_n-$ oder $-(CR^1R^2-O)_n-CR^1R^2-$,
$R^1$ und $R^2$ unabhängig voneinander für H oder einen $C_{1-6}$-Alkylrest, insbesondere einen Methylrest, und
n für eine Zahl von 1 bis 30, insbesondere 1 bis 3, stehen,
sowie deren Mischungen. Besonders bevorzugt ist Ethylenglycoldimethacrylat. Das Molverhältnis von ethylenisch einfach ungesättigtem Monomer oder der Summe ethylenisch einfach ungesättigter Monomere zu Vernetzungsmonomer liegt vorzugsweise im Bereich von 100 zu 1 bis 20 zu 1, insbesondere 70 zu 1 bis 30 zu 1.

Die erfindungsgemäß eingesetzten Polymere weisen N-Vinylpyrrolidon und das ethylenisch ungesättigte Monomer mit Amidfunktion vorzugsweise im Gewichtsverhältnis im Bereich von 99:1 bis 50:50, insbesondere von 98:2 bis 55:45 und besonders bevorzugt von 95:5 bis 80:20 auf. In bevorzugten Ausführungsformen der einzelnen Aspekte der Erfindung handelt es sich um ein Polymer, in dem der Anteil des Monomers Vinylpyrrolidon 50 Gew.-% bis 99 Gew.-%, insbesondere 80 Gew.-% bis 99 Gew.-% beträgt, und/oder der Anteil des ethylenisch ungesättigte Monomers mit Amidfunktion 1 Gew.-% bis 50 Gew.-%, insbesondere 1 Gew.-% bis 20 Gew.-% beträgt.

Der polymere Wirkstoff weist vorzugsweise ein mittleres Molekulargewicht (hier und im folgenden bei mittleren Molekulargewichtsangaben: Zahlenmittel) im Bereich von 1000 g/mol bis 500000 g/mol, insbesondere von 1100 g/mol bis 150000 g/mol auf.

Das Polymer zeigt Wechselwirkungen mit anionischen Tensiden wie insbesondere linearem Alkylbenzolsulfonat, die auf die Ausbildung eines Tensid-Polymer-Aggregats zurückzuführen sein können. Der Effekt kann über eine Messung der Oberflächen- oder Grenzflächenspannung nachgewiesen werden, wobei die Oberflächen- oder Grenzflächenspannung durch die Anwesenheit des Polymers erhöht wird. Diese Erhöhung kann darauf beruhen, dass sich ein reinigungsaktives Aggregat in der Lösung bildet und daher weniger Tensid an der Grenzfläche vorhanden ist.

Zur Bestimmung des Aggregationsparameters $X_{ag}$ wird die Oberflächenspannung $\gamma$ einer wässrigen Lösung von 0,12 g/l linearem $C_{10-13}$-Alkylbenzolsulfonat, wie es zum Beispiel unter den Handelsnamen Disponil® LDBS 55 oder Marlon® A360 erhältlich ist, in Ab- und Anwesenheit von 0,2 g/l des Polymers gemessen und der Wert in Abwesenheit

des Polymers von dem Wert in Anwesenheit des Polymers subtrahiert:

$$X_{ag} = \gamma_1 \text{ (Tensid + Polymer)} - \gamma_2 \text{ (Tensid)}$$

Dabei kann die Messung der Oberflächenspannung mittels der Du-Noüy Ringmethode, beispielsweise unter Einsatz eines TE3-Ring/Platten Tensiometers der Firma Lauda (Lauda-Königshofen) vorgenommen werden. Hierzu wird ein Ring aus beispielsweise Metall, der an einem Torsionskraftmesser befestigt ist, so in die Tensid-Polymer-Lösung eingetaucht, dass sich der Ring unter der Oberfläche der Lösung befindet. Der Ring wird dann langsam aus der Lösung gezogen und die Kraft, die auf den Messring ausgeübt wird, kurz bevor der Flüssigkeitsfilm abreißt, wird mit dem Torsionskraftmesser gemessen. Die Oberflächenspannung kann bei Kenntnis des Durchmessers des Ringes und der Abreißkraft berechnet werden.

Die Messungen werden jeweils bei 25°C unter Einstellung der Messlösungen auf pH 8,5 vorgenommen. Tritt das Polymer mit dem Tensid in Wechselwirkung, treten Aggregationsparameter $X_{ag}$ > 1 mN/m, vorzugsweise $X_{ag}$ > 2,5 mN/m und insbesondere im Bereich von 3 mN/m bis 5 mN/m auf.

Ein weiterer Gegenstand der Erfindung ist ein Verfahren zum Entfernen von insbesondere bleich- oder enzymsensitiven Anschmutzungen von Textilien oder harten Oberflächen, bei dem ein Wasch- oder Reinigungsmittel und ein durch Copolymerisation von N-Vinylpyrrolidon mit ethylenisch ungesättigten Verbindungen, die eine Amidfunktion aufweisen, ausgewählt aus der Gruppe umfassend Acrylamid, Methacrylamid, N-Alkylacrylamid, N-Alkylmethacrylamid, N,N-Dialkylacrylamid und N,N-Dialkylmethacrylamid, in denen die Alkylgruppen 1 bis 10 C-Atome, insbesondere 1 bis 4 C-Atome aufweisen, sowie Mischungen aus mindestens 2 dieser Verbindungen erhältliches Polymer, dass einen Aggregationsparameter $X_{ag}$ mit $X_{ag}$> 1 mN/m aufweist, zum Einsatz kommen. Dieses Verfahren kann manuell oder maschinell, zum Beispiel mit Hilfe einer Haushaltswaschmaschine oder Geschirrspülmaschine, ausgeführt werden. Dabei ist es möglich, das insbesondere flüssige Mittel und den Wirkstoff gleichzeitig oder nacheinander anzuwenden. Die gleichzeitige Anwendung lässt sich besonders vorteilhaft durch den Einsatz eines Mittels, welches den Wirkstoff enthält, durchführen. Unter bleich- oder enzymsensitiven Anschmutzungen werden solche verstanden, die üblicherweise von Bleichmitteln oder mit Hilfe von Enzymen zumindest anteilsweise entfernbar sind.

Die erfindungsgemäß verwendeten Wirkstoffe sind auf einfachem Wege durch radikalische Polymerisation der ethylenisch ungesättigten Monomere herstellbar. Die Polymerisation kann als statistische oder Block-Copolymerisation geführt werden.

Der Einsatz der erfindungsgemäß verwendeten Wirkstoffe führt zu einer signifikant besseren Ablösung von insbesondere bleich- oder enzymsensitiven Anschmutzungen auf harten Oberflächen und auf Textilien, auch solchen aus Baumwolle oder mit einem Anteil von Baumwolle, als dies bei Verwendung bisher für diesen Zweck bekannter Verbindungen der Fall ist. Alternativ können bei gleich bleibendem Schmutzablösevermögen bedeutende Mengen an Tensiden eingespart werden.

Die erfindungsgemäße Verwendung kann im Rahmen eines Wasch- oder Reinigungsprozesses derart erfolgen, dass man den Wirkstoff einer wasch- oder reinigungsmittelhaltigen Flotte zusetzt oder vorzugsweise den Wirkstoff als Bestandteil eines Wasch- oder Reinigungsmittels in die Flotte einbringt, wobei die Konzentration an Wirkstoff in der Flotte vorzugsweise im Bereich von 0,01 g/l bis 0,5 g/l, insbesondere von 0,02 g/l bis 0,2 g/l liegt.

Ein weiterer Gegenstand der Erfindung ist daher ein Wasch- oder Reinigungsmittel, enthaltend ein durch Copolymerisation von N-Vinylpyrrolidon mit ethylenisch ungesättigten Verbindungen, die eine Amidfunktion aufweisen, ausgewählt aus der Gruppe umfassend Acrylamid, Methacrylamid, N-Alkylacrylamid, N-Alkylmethacrylamid, N,N-Dialkylacrylamid und N,N-Dialkylmethacrylamid, in denen die Alkylgruppen 1 bis 10 C-Atome, insbesondere 1 bis 4 C-Atome aufweisen, sowie Mischungen aus mindestens 2 dieser Verbindungen erhältliches Polymer, das insbesondere einen Aggregationsparameter $X_{ag}$ mit $X_{ag}$ > 1 mN/m, vorzugsweise > 2,5 mN/m und insbesondere im Bereich von 3 mN/m bis 5 mN/m aufweist, und synthetisches Aniontensid vom Sulfat- und/oder Sulfonattyp. Wasch- oder Reinigungsmittel, die einen erfindungsgemäß zu verwendenden Wirkstoff enthalten oder mit diesem zusammen verwendet oder im erfindungsgemäßen Verfahren eingesetzt werden, können alle üblichen sonstigen Bestandteile derartiger Mittel enthalten, die nicht in unerwünschter Weise mit dem erfindungswesentlichen Wirkstoff wechselwirken. Vorzugsweise wird ein oben definierter Wirkstoff in Mengen von 0,1 Gew.-% bis 10 Gew.-%, insbesondere 0,5 Gew.-% bis 2 Gew.-% in Wasch- oder Reinigungsmittel eingearbeitet.

Überraschenderweise wurde gefunden, dass derartige Wirkstoffe die Wirkung bestimmter anderer Wasch- und Reinigungsmittelinhaltsstoffe positiv beeinflussen und dass umgekehrt die Wirkung des Wirkstoffs durch bestimmte andere Inhaltsstoffe noch zusätzlich verstärkt wird. Diese Effekte treten insbesondere bei Bleichmitteln, bei enzymatischen Wirkstoffen, insbesondere Proteasen und Lipasen, bei wasserlöslichen anorganischen und/oder organischen Buildern, insbesondere auf Basis oxidierter Kohlenhydrate oder polymeren Polycarboxylaten und bei synthetischen Aniontensiden vom Sulfat- und Sulfonattyp, auf, weshalb der Einsatz mindestens eines der genannten weiteren Inhaltsstoffe zusammen mit erfindungsgemäß zu verwendendem Wirkstoff bevorzugt ist.

Ein Mittel, welches einen erfindungsgemäß zu verwendenden Wirkstoff enthält oder mit diesem zusammen verwendet wird oder im erfindungsgemäßen Verfahren zum Einsatz kommt, kann vorzugsweise Bleichmittel auf Persauerstoffbasis, insbesondere in Mengen im Bereich von 5 Gew.-% bis 70 Gew.-%, sowie gegebenenfalls Bleichaktivator, insbesondere in Mengen im Bereich von 2 Gew.-% bis 10 Gew.-%, enthalten. Die in Betracht kommenden Bleichmittel sind vorzugsweise die in Waschmitteln in der Regel verwendeten Persauerstoffverbindungen wie Percarbonsäuren, beispielsweise Dodecandipersäure oder Phthaloylaminoperoxicapronsäure, Wasserstoffperoxid, Alkaliperborat, das als Tetra- oder Monohydrat vorliegen kann, Percarbonat, Perpyrophosphat und Persilikat, die in der Regel als Alkalisalze, insbesondere als Natriumsalze, vorliegen. Derartige Bleichmittel sind in Waschmitteln, welche einen erfindungsgemäß verwendeten Wirkstoff enthalten, vorzugsweise in Mengen bis zu 25 Gew.-%, insbesondere bis zu 15 Gew.-% und besonders bevorzugt von 5 Gew.-% bis 15 Gew.-%, jeweils bezogen auf gesamtes Mittel, vorhanden, wobei insbesondere Percarbonat zum Einsatz kommt. Die fakultativ vorhandene Komponente der Bleichaktivatoren umfasst die üblicherweise verwendeten N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Urazole, Diketopiperazine, Sulfurylamide und Cyanurate, außerdem Carbonsäureanhydride, insbesondere Phthalsäureanhydrid, Carbonsäureester, insbesondere Natrium-isononanoyl-phenolsulfonat, und acylierte Zuckerderivate, insbesondere Pentaacetylglukose, sowie kationische Nitrilderivate wie Trimethylammoniumacetonitril-Salze. Die Bleichaktivatoren können zur Vermeidung der Wechselwirkung mit den Perverbindungen bei der Lagerung in bekannter Weise mit Hüllsubstanzen überzogen und/oder granuliert worden sein, wobei mit Hilfe von Carboxymethylcellulose granuliertes Tetraacetylethylendiamin mit mittleren Korngrößen von 0,01 mm bis 0,8 mm, granuliertes 1,5-Diacetyl-2,4-dioxohexahydro-1,3,5-triazin, und/oder in Teilchenform konfektioniertes Trialkylammoniumacetonitril besonders bevorzugt ist. In Waschmitteln sind derartige Bleichaktivatoren vorzugsweise in Mengen bis zu 8 Gew.-%, insbesondere von 2 Gew.-% bis 6 Gew.-%, jeweils bezogen auf gesamtes Mittel, enthalten.

In einer bevorzugten Ausführungsform enthält ein erfindungsgemäßes oder im Rahmen der erfindungsgemäßen Verwendung eingesetztes Mittel synthetisches Aniontensid vom Sulfat- und/oder Sulfonattyp, insbesondere Alkylbenzolsulfonat, Fettalkylsulfat, Fettalkylethersulfat, Alkyl- und/oder Dialkylsulfosuccinat, Sulfofettsäureester und/oder Sulfofettsäuredisalze, insbesondere in einer Menge im Bereich von 2 Gew.-% bis 25 Gew.-%. Bevorzugt wird das Aniontensid aus den Alkylbenzolsulfonaten, den Alkyl- oder Alkenylsulfaten und/oder den Alkyl- oder Alkenylethersulfaten ausgewählt, in denen die Alkyl- oder Alkenylgruppe 8 bis 22, insbesondere 12 bis 18 C-Atome besitzt. Bei diesen handelt es sich üblicherweise nicht um Einzelsubstanzen, sondern um Schnitte oder Mischungen. Darunter sind solche bevorzugt, deren Anteil an Verbindungen mit längerkettigen Resten im Bereich von 16 bis 18 C-Atomen über 20 Gew.-% beträgt.

Eine weitere Ausführungsform derartiger Mittel umfasst die Anwesenheit von nichtionischem Tensid, ausgewählt aus Fettalkylpolyglykosiden, Fettalkylpolyalkoxylaten, insbesondere -ethoxylaten und/oder -propoxylaten, Fettsäurepolyhydroxyamiden und/oder Ethoxylierungs-und/oder Propoxylierungsprodukten von Fettalkylaminen, vicinalen Diolen, Fettsäurealkylestern und/oder Fettsäureamiden sowie deren Mischungen, insbesondere in einer Menge im Bereich von 2 Gew.-% bis 25 Gew.-%.

Zu den in Frage kommenden nichtionischen Tensiden gehören die Alkoxylate, insbesondere die Ethoxylate und/oder Propoxylate von gesättigten oder ein- bis mehrfach ungesättigten linearen oder verzweigtkettigen Alkoholen mit 10 bis 22 C-Atomen, vorzugsweise 12 bis 18 C-Atomen. Der Alkoxylierungsgrad der Alkohole liegt dabei in der Regel zwischen 1 und 20, vorzugsweise zwischen 3 und 10. Sie können in bekannter Weise durch Umsetzung der entsprechenden Alkohole mit den entsprechenden Alkylenoxiden hergestellt werden. Geeignet sind insbesondere die Derivate der Fettalkohole, obwohl auch deren verzweigtkettige Isomere, insbesondere sogenannte Oxoalkohole, zur Herstellung verwendbarer Alkoxylate eingesetzt werden können. Brauchbar sind demgemäß die Alkoxylate, insbesondere die Ethoxylate, primärer Alkohole mit linearen, insbesondere Dodecyl-, Tetradecyl-, Hexadecyl- oder Octadecyl-Resten sowie deren Gemische. Außerdem sind entsprechende Alkoxylierungsprodukte von Alkylaminen, vicinalen Diolen und Carbonsäureamiden, die hinsichtlich des Alkylteils den genannten Alkoholen entsprechen, verwendbar. Darüberhinaus kommen die Ethylenoxid- und/oder Propylenoxid-Insertionsprodukte von Fettsäurealkylestern sowie Fettsäurepolyhydroxyamide in Betracht. Zur Einarbeitung in die erfindungsgemäßen Mittel geeignete sogenannte Alkylpolyglykoside sind Verbindungen der allgemeinen Formel $(G)_n$-$OR^{12}$, in der $R^{12}$ einen Alkyl- oder Alkenylrest mit 8 bis 22 C-Atomen, G eine Glykoseeinheit und n eine Zahl zwischen 1 und 10 bedeuten. Bei der Glykosidkomponente $(G)_n$ handelt es sich um Oligo- oder Polymere aus natürlich vorkommenden Aldose- oder Ketose-Monomeren, zu denen insbesondere Glucose, Mannose, Fruktose, Galaktose, Talose, Gulose, Altrose, Allose, Idose, Ribose, Arabinose, Xylose und Lyxose gehören. Die aus derartigen glykosidisch verknüpften Monomeren bestehenden Oligomere werden außer durch die Art der in ihnen enthaltenen Zucker durch deren Anzahl, den sogenannten Oligomerisierungsgrad, charakterisiert. Der Oligomerisierungsgrad n nimmt als analytisch zu ermittelnde Größe im allgemeinen gebrochene Zahlenwerte an; er liegt bei Werten zwischen 1 und 10, bei den vorzugsweise eingesetzten Glykosiden unter einem Wert von 1,5, insbesondere zwischen 1,2 und 1,4. Bevorzugter Monomer-Baustein ist wegen der guten Verfügbarkeit Glucose. Der Alkyl- oder Alkenylteil $R^{12}$ der Glykoside stammt bevorzugt ebenfalls aus leicht zugänglichen Derivaten nachwachsender

Rohstoffe, insbesondere aus Fettalkoholen, obwohl auch deren verzweigtkettige Isomere, insbesondere sogenannte Oxoalkohole, zur Herstellung verwendbarer Glykoside eingesetzt werden können. Brauchbar sind demgemäß insbesondere die primären Alkohole mit linearen Octyl-, Decyl-, Dodecyl-, Tetradecyl-, Hexadecyl- oder Octadecylresten sowie deren Gemische. Besonders bevorzugte Alkylglykoside enthalten einen Kokosfettalkylrest, das heißt Mischungen mit im wesentlichen $R^{12}$=Dodecyl und $R^{12}$=Tetradecyl.

Nichtionisches Tensid ist in Mitteln, welche einen erfindungsgemäß verwendeten Wirkstoff enthalten oder im Rahmen der erfindungsgemäßen Verwendung eingesetzt werden, vorzugsweise in Mengen von 1 Gew.-% bis 30 Gew.-%, insbesondere von 1 Gew.-% bis 25 Gew.-% enthalten, wobei Mengen im oberen Teil dieses Bereiches eher in flüssigen Waschmitteln anzutreffen sind und teilchenförmige Waschmittel vorzugsweise eher geringere Mengen von bis zu 5 Gew.-% enthalten.

Die Mittel können stattdessen oder zusätzlich weitere Tenside, vorzugsweise synthetische Aniontenside des Sulfat- oder Sulfonat-Typs, zu denen beispielsweise die bereits genannten Alkylbenzolsulfonate gehören, in Mengen von vorzugsweise nicht über 20 Gew.-%, insbesondere von 0,1 Gew.% bis 18 Gew.-%, jeweils bezogen auf gesamtes Mittel, enthalten. Als für den Einsatz in derartigen Mitteln besonders geeignete synthetische Aniontenside sind die Alkyl- und/oder Alkenylsulfate mit 8 bis 22 C-Atomen, die ein Alkali-, Ammonium- oder Alkyl- oder Hydroxyalkyl-substituiertes Ammoniumion als Gegenkation tragen, zu nennen. Bevorzugt sind die Derivate der Fettalkohole mit insbesondere 12 bis 18 C-Atomen und deren verzweigtkettiger Analoga, der sogenannten Oxoalkohole. Die Alkyl- und Alkenylsulfate können in bekannter Weise durch Reaktion der entsprechenden Alkoholkomponente mit einem üblichen Sulfatierungsreagenz, insbesondere Schwefeltrioxid oder Chlorsulfonsäure, und anschließende Neutralisation mit Alkali-, Ammonium- oder Alkyl- oder Hydroxyalkyl-substituierten Ammoniumbasen hergestellt werden. Zu den einsetzbaren Tensiden vom Sulfat-Typ gehören auch die sulfatierten Alkoxylierungsprodukte der genannten Alkohole, sogenannte Ethersulfate. Vorzugsweise enthalten derartige Ethersulfate 2 bis 30, insbesondere 4 bis 10 Ethylenglykol-Gruppen pro Molekül. Zu den geeigneten Aniontensiden vom Sulfonat-Typ gehören die durch Umsetzung von Fettsäureestern mit Schwefeltrioxid und anschließender Neutralisation erhältlichen $\alpha$-Sulfoester, insbesondere die sich von Fettsäuren mit 8 bis 22 C-Atomen, vorzugsweise 12 bis 18 C-Atomen, und linearen Alkoholen mit 1 bis 6 C-Atomen, vorzugsweise 1 bis 4 C-Atomen, ableitenden Sulfonierungsprodukte, sowie die durch formale Verseifung aus diesen hervorgehenden Sulfofettsäuren. Bevorzugte Aniontenside sind auch die Salze von Sulfobernsteinsäurestern, die auch als Alkylsulfosuccinate oder Dialkylsulfosuccinate bezeichnet werden, und die Monoester oder Diester der Sulfobernsteinsäure mit Alkoholen, vorzugsweise Fettalkoholen und insbesondere ethoxylierten Fettalkoholen darstellen. Bevorzugte Sulfosuccinate enthalten $C_8$- bis $C_{18}$-Fettalkoholreste oder Mischungen aus diesen. Insbesondere bevorzugte Sulfosuccinate enthalten einen ethoxylierten Fettalkoholrest, der für sich betrachtet ein nichtionisches Tenside darstellt. Dabei sind wiederum Sulfosuccinate, deren Fettalkohol-Reste sich von ethoxylierten Fettalkoholen mit eingeengter Homologenverteilung ableiten, besonders bevorzugt.

Als weitere fakultative tensidische Inhaltsstoffe kommen Seifen in Betracht, wobei gesättigte Fettsäureseifen, wie die Salze der Laurinsäure, Myristinsäure, Palmitinsäure oder Stearinsäure, sowie aus natürlichen Fettsäuregemischen, zum Beispiel Kokos-, Palmkern- oder Talgfettsäuren, abgeleitete Seifen geeignet sind. Insbesondere sind solche Seifengemische bevorzugt, die zu 50 Gew.-% bis 100 Gew.-% aus gesättigten $C_{12}$-$C_{18}$-Fettsäureseifen und zu bis 50 Gew.-% aus Ölsäureseife zusammengesetzt sind. Vorzugsweise ist Seife in Mengen von 0,1 Gew.-% bis 5 Gew.-% enthalten. Insbesondere in flüssigen Mitteln, welche einen erfindungsgemäß verwendeten Wirkstoff enthalten, können jedoch auch höhere Seifenmengen von in der Regel bis zu 20 Gew.-% enthalten sein.

Gewünschtenfalls können die Mittel auch Betaine und/oder kationische Tenside enthalten, die - falls vorhanden - vorzugsweise in Mengen von 0,5 Gew.-% bis 7 Gew.-% eingesetzt werden.

In einer weiteren Ausführungsform enthält das Mittel wasserlöslichen und/oder wasserunlöslichen Builder, insbesondere ausgewählt aus Alkalialumosilikat, kristallinem Alkalisilikat mit Modul über 1, monomerem Polycarboxylat, polymerem Polycarboxylat und deren Mischungen, insbesondere in Mengen im Bereich von 2,5 Gew.-% bis 60 Gew.-%.

Das Mittel enthält vorzugsweise 20 Gew.-% bis 55 Gew.-% wasserlöslichen und/oder wasserunlöslichen, organischen und/oder anorganischen Builder. Zu den wasserlöslichen organischen Buildersubstanzen gehören insbesondere solche aus der Klasse der Polycarbonsäuren, insbesondere Citronensäure und Zuckersäuren, sowie der polymeren (Poly-)carbonsäuren, insbesondere die durch Oxidation von Polysacchariden zugänglichen Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättigter Carbonsäuren liegt im allgemeinen zwischen 5000 g/mol und 200000 g/mol, die der Copolymeren zwischen 2000 g/mol und 200000 g/mol, vorzugsweise 50000 g/mol bis 120000 g/mol, bezogen auf freie Säure. Ein besonders bevorzugtes Acrylsäure-Maleinsäure-Copolymer weist eine relative Molekülmasse von 50000 g/mol bis 100000 g/mol auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei Carbonsäuren und/oder deren Salze sowie als drittes Monomer

Vinylalkohol und/oder ein Vinylalkohol-Derivat oder ein Kohlenhydrat enthalten. Das erste saure Monomer oder dessen Salz leitet sich von einer monoethylenisch ungesättigten $C_3$-$C_8$-Carbonsäure und vorzugsweise von einer $C_3$-$C_4$-Monocarbonsäure, insbesondere von (Meth-)acrylsäure ab. Das zweite saure Monomer oder dessen Salz kann ein Derivat einer $C_4$-$C_8$-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von $C_1$-$C_4$-Carbonsäuren, mit Vinylalkohol darstellen. Bevorzugte Terpolymere enthalten dabei 60 Gew.-% bis 95 Gew.-%, insbesondere 70 Gew.-% bis 90 Gew.-% (Meth)acrylsäure und/oder (Meth)acrylat, besonders bevorzugt Acrylsäure und/oder Acrylat, und Maleinsäure und/oder Maleinat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Terpolymere, in denen das Gewichtsverhältnis (Meth)acrylsäure und/oder (Meth)acrylat zu Maleinsäure und/oder Maleat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer oder dessen Salz kann auch ein Derivat einer Allylsulfonsäure sein, die in 2-Stellung mit einem Alkylrest, vorzugsweise mit einem $C_1$-$C_4$-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure und/oder (Meth)acrylat, besonders bevorzugt Acrylsäure und/oder Acrylat, 10 Gew.-% bis 30 Gew.-%, vorzugsweise 15 Gew.-% bis 25 Gew.-% Methallylsulfonsäure und/oder Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind, besonders bevorzugt ist Saccharose. Durch den Einsatz des dritten Monomers werden vermutlich Sollbruchstellen in dem Polymer eingebaut, die für die gute biologische Abbaubarkeit des Polymers verantwortlich sind. Diese Terpolymere weisen im Allgemeinen eine relative Molekülmasse zwischen 1000 g/mol und 200000 g/mol, vorzugsweise zwischen 2000 g/mol und 50000 g/mol und insbesondere zwischen 3000 g/mol und 10000 g/mol auf. Sie können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Polycarbonsäuren werden in der Regel in Form ihrer wasserlöslichen Salze, insbesondere ihre Alkalisalze, eingesetzt.

Derartige organische Buildersubstanzen sind vorzugsweise in Mengen bis zu 40 Gew.-%, insbesondere bis zu 25 Gew.-% und besonders bevorzugt von 1 Gew.-% bis 5 Gew.-% enthalten. Mengen nahe der genannten Obergrenze werden vorzugsweise in pastenförmigen oder flüssigen, insbesondere wasserhaltigen, Mitteln eingesetzt.

Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Alumosilikate in Waschmittelqualität, insbesondere Zeolith NaA und gegebenenfalls NaX, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 $\mu m$ auf und bestehen vorzugsweise zu wenigstens 80 Gew.-% aus Teilchen mit einer Größe unter 10 $\mu m$. Ihr Calciumbindevermögen, das nach den Angaben der deutschen Patentschrift DE 24 12 837 bestimmt werden kann, liegt im Bereich von 100 bis 200 mg CaO pro Gramm. Geeignete Substitute oder Teilsubstitute für das genannte Alumosilikat sind kristalline Alkalisilikate, die allein oder im Gemisch mit amorphen Silikaten vorliegen können. Die in den Mitteln als Gerüststoffe brauchbaren Alkalisilikate weisen vorzugsweise ein molares Verhältnis von Alkalioxid zu $SiO_2$ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis $Na_2O:SiO_2$ von 1:2 bis 1:2,8. Derartige amorphe Alkalisilikate sind beispielsweise unter dem Namen Portil® im Handel erhältlich. Solche mit einem molaren Verhältnis $Na_2O:SiO_2$ von 1:1,9 bis 1:2,8 werden im Rahmen der Herstellung bevorzugt als Feststoff und nicht in Form einer Lösung zugegeben. Als kristalline Silikate, die allein oder im Gemisch mit amorphen Silikaten vorliegen können, werden vorzugsweise kristalline Schichtsilikate der allgemeinen Formel $Na_2Si_xO_{2x+1} \cdot yH_2O$ eingesetzt, in der x, das sogenannte Modul, eine Zahl von 1,9 bis 4 und y eine Zahl von 0 bis 20 ist und bevorzugte Werte für x 2, 3 oder 4 sind. Kristalline Schichtsilikate, die unter diese allgemeine Formel fallen, werden beispielsweise in der europäischen Patentanmeldung EP 0 164 514 beschrieben. Bevorzugte kristalline Schichtsilikate sind solche, bei denen x in der genannten allgemeinen Formel die Werte 2 oder 3 annimmt. Insbesondere sind sowohl ß- als auch $\delta$-Natriumdisilikate ($Na_2Si_2O_5 \cdot yH_2O$) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in Mitteln, welche einen erfindungsgemäß zu verwendenden Wirkstoff enthalten, eingesetzt werden. In einer weiteren bevorzugten Ausführungsform erfindungsgemäßer Mittel wird ein kristallines Natriumschichtsilikat mit einem Modul von 2 bis 3 eingesetzt, wie es aus Sand und Soda hergestellt werden kann. Kristalline Natriumsilikate mit einem Modul im Bereich von 1,9 bis 3,5, werden in einer weiteren bevorzugten Ausführungsform von Waschmitteln, welche einen erfindungsgemäß verwendeten Wirkstoff enthalten, eingesetzt. Deren Gehalt an Alkalisilikaten beträgt vorzugsweise 1 Gew.-% bis 50 Gew.-% und insbesondere 5 Gew.-% bis 35 Gew.-%, bezogen auf wasserfreie Aktivsubstanz. Falls als zusätzliche Buildersubstanz auch Alkalialumosilikat, insbesondere Zeolith, vorhanden ist, beträgt

der Gehalt an Alkalisilikat vorzugsweise 1 Gew.-% bis 15 Gew.-% und insbesondere 2 Gew.-% bis 8 Gew.-%, bezogen auf wasserfreie Aktivsubstanz. Das Gewichtsverhältnis Alumosilikat zu Silikat, jeweils bezogen auf wasserfreie Aktivsubstanzen, beträgt dann vorzugsweise 4:1 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Zusätzlich zum genannten anorganischen Builder können weitere wasserlösliche oder wasserunlösliche anorganische Substanzen in den Mitteln, welche einen erfindungsgemäß zu verwendenden Wirkstoff enthalten, mit diesem zusammen verwendet oder in erfindungsgemäßen Verfahren eingesetzt werden, enthalten sein. Geeignet sind in diesem Zusammenhang die Alkalicarbonate, Alkalihydrogencarbonate und Alkalisulfate sowie deren Gemische. Derartiges zusätzliches anorganisches Material kann in Mengen bis zu 70 Gew.-% vorhanden sein.

Zusätzlich können die Mittel weitere in Wasch- oder Reinigungsmitteln übliche Bestandteile enthalten. Zu diesen fakultativen Bestandteilen gehören insbesondere Enzyme, Enzymstabilisatoren, Komplexbildner für Schwermetalle, beispielsweise Aminopolycarbonsäuren, Aminohydroxypolycarbonsäuren, Polyphosphonsäuren und/oder Aminopolyphosphonsäuren, Schauminhibitoren, beispielsweise Organopolysiloxane oder Paraffine, Lösungsmittel und optische Aufheller, beispielsweise Stilbendisulfonsäurederivate. Vorzugsweise sind in Mitteln, welche einen erfindungsgemäß verwendeten Wirkstoff enthalten, bis zu 1 Gew.-%, insbesondere 0,01 Gew.-% bis 0,5 Gew.-% optische Aufheller, insbesondere Verbindungen aus der Klasse der substituierten 4,4'-Bis-(2,4,6-tri-amino-s-triazinyl)-stilben-2,2'-disulfonsäuren, bis zu 5 Gew.-%, insbesondere 0,1 Gew.-% bis 2 Gew.-% Komplexbildner für Schwermetalle, insbesondere Aminoalkylenphosphonsäuren und deren Salze und bis zu 2 Gew.-%, insbesondere 0,1 Gew.-% bis 1 Gew.-% Schauminhibitoren enthalten, wobei sich die genannten Gewichtsanteile jeweils auf gesamtes Mittel beziehen.

Lösungsmittel, die insbesondere bei flüssigen Mitteln eingesetzt werden können, sind neben Wasser vorzugsweise solche, die wassermischbar sind. Zu diesen gehören die niederen Alkohole, beispielsweise Ethanol, Propanol, iso-Propanol, und die isomeren Butanole, Glycerin, niedere Glykole, beispielsweise Ethylen- und Propylenglykol, und die aus den genannten Verbindungsklassen ableitbaren Ether. In derartigen flüssigen Mitteln liegen die erfindungsgemäß verwendeten Wirkstoffe in der Regel gelöst oder in suspendierter Form vor.

Die vorzugsweise anwesenden Enzyme werden insbesondere aus der Gruppe umfassend Protease, Amylase, Lipase, Cellulase, Hemicellulase, Oxidase, Peroxidase, Pektinase und Mischungen aus diesen ausgewählt. In erster Linie kommt aus Mikroorganismen, wie Bakterien oder Pilzen, gewonnene Protease in Frage. Sie kann in bekannter Weise durch Fermentationsprozesse aus geeigneten Mikroorganismen gewonnen werden. Proteasen sind im Handel beispielsweise unter den Namen BLAP®, Savinase®, Esperase®, Maxatase®, Optimase®, Alcalase®, Durazym® oder Maxapem® erhältlich. Die einsetzbare Lipase kann beispielsweise aus Humicola lanuginosa, aus Bacillus-Arten, aus Pseudomonas-Arten, aus Fusarium-Arten, aus Rhizopus-Arten oder aus Aspergillus-Arten gewonnen werden. Geeignete Lipasen sind beispielsweise unter den Namen Lipolase®, Lipozym®, Lipomax®, Lipex®, Amano®-Lipase, Toyo-Jozo®-Lipase, Meito®-Lipase und Diosynth®-Lipase im Handel erhältlich. Geeignete Amylasen sind beispielsweise unter den Namen Maxamyl®, Termamyl®, Duramyl® und Purafect® OxAm handelsüblich. Die einsetzbare Cellulase kann ein aus Bakterien oder Pilzen gewinnbares Enzym sein, welches ein pH-Optimum vorzugsweise im schwach sauren bis schwach alkalischen Bereich von 6 bis 9,5 aufweist. Derartige Cellulasen sind unter den Namen Celluzyme®, Carezyme® und Ecostone® handelsüblich. Geeignete Pektinasen sind beispielsweise unter den Namen Gamanase®, Pektinex AR®, X-Pect® oder Pectaway® von Novozymes, unter dem Namen Rohapect UF®, Rohapect TPL®, Rohapect PTE100®, Rohapect MPE®, Rohapect MA plus HC, Rohapect DA12L®, Rohapect 10L®, Rohapect B1L® von AB Enzymes und unter dem Namen Pyrolase® von Diversa Corp., San Diego, CA, USA erhältlich.

Zu den gegebenenfalls, insbesondere in flüssigen Mitteln vorhandenen üblichen Enzymstabilisatoren gehören Aminoalkohole, beispielsweise Mono-, Di-, Triethanol- und -propanolamin und deren Mischungen, niedere Carbonsäuren, Borsäure, Alkaliborate, Borsäure-Carbonsäure-Kombinationen, Borsäureester, Boronsäurederivate, Calciumsalze, beispielsweise Ca-Ameisensäure-Kombination, Magnesiumsalze, und/oder schwefelhaltige Reduktionsmittel.

Zu den geeigneten Schauminhibitoren gehören langkettige Seifen, insbesondere Behenseife, Fettsäureamide, Paraffine, Wachse, Mikrokristallinwachse, Organopolysiloxane und deren Gemische, die darüberhinaus mikrofeine, gegebenenfalls silanierte oder anderweitig hydrophobierte Kieselsäure enthalten können. Zum Einsatz in partikelförmigen Mitteln sind derartige Schauminhibitoren vorzugsweise an granulare, wasserlösliche Trägersubstanzen gebunden.

Zu den bekanntlich polyesteraktiven schmutzablösevermögenden Polymeren, die zusätzlich zu den erfindungswesentlichen Wirkstoffen eingesetzt werden können, gehören Copolyester aus Dicarbonsäuren, beispielsweise Adipinsäure, Phthalsäure oder Terephthalsäure, Diolen, beispielsweise Ethylenglykol oder Propylenglykol, und Polydiolen, beispielsweise Polyethylenglykol oder Polypropylenglykol. Zu den bevorzugt eingesetzten schmutzablösevermögenden Polyestern gehören solche Verbindungen, die formal durch Veresterung zweier Monomerteile zugänglich sind, wobei das erste Monomer eine Dicarbonsäure HOOC-Ph-COOH und das zweite Monomer ein Diol HO-$(CHR^{11}-)_a$OH, das auch als polymeres Diol H-(O-$(CHR^{11}-)_a)_b$OH vorliegen kann, ist. Darin bedeutet Ph einen o-, m- oder p-Phenylenrest, der 1 bis 4 Substituenten, ausgewählt aus Alkylresten mit 1 bis 22 C-Atomen, Sulfonsäuregruppen, Carboxylgruppen und deren Mischungen, tragen kann, $R^{11}$ Wasserstoff, einen Alkylrest mit 1 bis 22 C-Atomen und deren Mischungen,

a eine Zahl von 2 bis 6 und b eine Zahl von 1 bis 300. Vorzugsweise liegen in den aus diesen erhältlichen Polyestern sowohl Monomerdioleinheiten $-O-(CHR^{11}-)_aO-$ als auch Polymerdioleinheiten $-(O-(CHR^{11}-)_a)_bO-$ vor. Das molare Verhältnis von Monomerdioleinheiten zu Polymerdioleinheiten beträgt vorzugsweise 100:1 bis 1:100, insbesondere 10:1 bis 1:10. In den Polymerdioleinheiten liegt der Polymerisationsgrad b vorzugsweise im Bereich von 4 bis 200, insbesondere von 12 bis 140. Das Molekulargewicht oder das mittlere Molekulargewicht oder das Maximum der Molekulargewichtsverteilung bevorzugter schmutzablösevermögender Polyester liegt im Bereich von 250 g/mol bis 100 000 g/mol, insbesondere von 500 g/mol bis 50 000 g/mol. Die dem Rest Ph zugrundeliegende Säure wird vorzugsweise aus Terephthalsäure, Isophthalsäure, Phthalsäure, Trimellithsäure, Mellithsäure, den Isomeren der Sulfophthalsäure, Sulfoisophthalsäure und Sulfoterephthalsäure sowie deren Gemischen ausgewählt. Sofern deren Säuregruppen nicht Teil der Esterbindungen im Polymer sind, liegen sie vorzugsweise in Salzform, insbesondere als Alkali- oder Ammoniumsalz vor. Unter diesen sind die Natrium- und Kaliumsalze besonders bevorzugt. Gewünschtenfalls können statt des Monomers HOOC-Ph-COOH geringe Anteile, insbesondere nicht mehr als 10 Mol-% bezogen auf den Anteil an Ph mit der oben gegebenen Bedeutung, anderer Säuren, die mindestens zwei Carboxylgruppen aufweisen, im schmutzablösevermögenden Polyester enthalten sein. Zu diesen gehören beispielsweise Alkylen- und Alkenylendicarbonsäuren wie Malonsäure, Bernsteinsäure, Fumarsäure, Maleinsäure, Glutarsäure, Adipinsäure, Pimelinsäure, Korksäure, Azelainsäure und Sebacinsäure. Zu den bevorzugten Diolen $HO-(CHR^{11}-)_aOH$ gehören solche, in denen $R^{11}$ Wasserstoff und a eine Zahl von 2 bis 6 ist, und solche, in denen a den Wert 2 aufweist und $R^{11}$ unter Wasserstoff und den Alkylresten mit 1 bis 10, insbesondere 1 bis 3 C-Atomen ausgewählt wird. Unter den letztgenannten Diolen sind solche der Formel $HO-CH_2-CHR^{11}-OH$, in der $R^{11}$ die obengenannte Bedeutung besitzt, besonders bevorzugt. Beispiele für Diolkomponenten sind Ethylenglykol, 1,2-Propylenglykol, 1,3-Propylenglykol, 1,4-Butandiol, 1,5-Pentandiol, 1,6-Hexandiol, 1,8-Octandiol, 1,2-Decandiol, 1,2-Dodecandiol und Neopentylglykol. Besonders bevorzugt unter den polymeren Diolen ist Polyethylenglykol mit einer mittleren Molmasse im Bereich von 1000 g/mol bis 6000 g/mol.

Gewünschtenfalls können diese wie oben beschrieben zusammengesetzten Polyester auch endgruppenverschlossen sein, wobei als Endgruppen Alkylgruppen mit 1 bis 22 C-Atomen und Ester von Monocarbonsäuren in Frage kommen. Den über Esterbindungen gebundenen Endgruppen können Alkyl-, Alkenyl- und Arylmonocarbonsäuren mit 5 bis 32 C-Atomen, insbesondere 5 bis 18 C-Atomen, zugrundeliegen. Zu diesen gehören Valeriansäure, Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure, Benzoesäure, die 1 bis 5 Substituenten mit insgesamt bis zu 25 C-Atomen, insbesondere 1 bis 12 C-Atomen tragen kann, beispielsweise tert.-Butylbenzoesäure. Den Endgruppen können auch Hydroxymonocarbonsäuren mit 5 bis 22 C-Atomen zugrundeliegen, zu denen beispielsweise Hydroxyvaleriansäure, Hydroxycapronsäure, Ricinolsäure, deren Hydrierungsprodukt Hydroxystearinsäure sowie o-, mund p-Hydroxybenzoesäure gehören. Die Hydroxymonocarbonsäuren können ihrerseits über ihre Hydroxylgruppe und ihre Carboxylgruppe miteinander verbunden sein und damit mehrfach in einer Endgruppe vorliegen. Vorzugsweise liegt die Anzahl der Hydroxymonocarbonsäureeinheiten pro Endgruppe, das heißt ihr Oligomerisierungsgrad, im Bereich von 1 bis 50, insbesondere von 1 bis 10. In einer bevorzugten Ausgestaltung der Erfindung werden Polymere aus Ethylenterephthalat und Polyethylenoxid-terephthalat, in denen die Polyethylenglykol-Einheiten Molgewichte von 750 g/mol bis 5000 g/mol aufweisen und das Molverhältnis von Ethylenterephthalat zu Polyethylenoxid-terephthalat 50:50 bis 90:10 beträgt, in Kombination mit einem erfindungswesentlichen Wirkstoff verwendet.

Die schmutzablösevermögenden Polymere sind vorzugsweise wasserlöslich, wobei unter dem Begriff "wasserlöslich" eine Löslichkeit von mindestens 0,01 g, vorzugsweise mindestens 0,1 g des Polymers pro Liter Wasser bei Raumtemperatur und pH 8 verstanden werden soll. Bevorzugt eingesetzte Polymere weisen unter diesen Bedingungen jedoch eine Löslichkeit von mindestens 1 g pro Liter, insbesondere mindestens 10 g pro Liter auf.

Die Herstellung erfindungsgemäßer fester Mittel bietet keine Schwierigkeiten und kann auf bekannte Weise, zum Beispiel durch Sprühtrocknen oder Granulation, erfolgen, wobei Enzyme und eventuelle weitere thermisch empfindliche Inhaltsstoffe wie zum Beispiel Bleichmittel gegebenenfalls später separat zugesetzt werden. Zur Herstellung erfindungsgemäßer Mittel mit erhöhtem Schüttgewicht, insbesondere im Bereich von 650 g/l bis 950 g/l, ist ein einen Extrusionsschritt aufweisendes Verfahren bevorzugt.

Zur Herstellung von erfindungsgemäßen Mitteln in Tablettenform, die einphasig oder mehrphasig, einfarbig oder mehrfarbig und insbesondere aus einer Schicht oder aus mehreren, insbesondere aus zwei Schichten bestehen können, geht man vorzugsweise derart vor, dass man alle Bestandteile - gegebenenfalls je einer Schicht - in einem Mischer miteinander vermischt und das Gemisch mittels herkömmlicher Tablettenpressen, beispielsweise Exzenterpressen oder Rundläuferpressen, mit Presskräften im Bereich von etwa 50 bis 100 kN, vorzugsweise bei 60 bis 70 kN verpresst. Insbesondere bei mehrschichtigen Tabletten kann es von Vorteil sein, wenn mindestens eine Schicht vorverpresst wird. Dies wird vorzugsweise bei Presskräften zwischen 5 und 20 kN, insbesondere bei 10 bis 15 kN durchgeführt. Man erhält so problemlos bruchfeste und dennoch unter Anwendungsbedingungen ausreichend schnell lösliche Tabletten mit Bruch- und Biegefestigkeiten von normalerweise 100 bis 200 N, bevorzugt jedoch über 150 N. Vorzugsweise weist eine derart hergestellte Tablette ein Gewicht von 10 g bis 50 g, insbesondere von 15 g bis 40 g auf. Die Raumform der Tabletten ist beliebig und kann rund, oval oder eckig sein, wobei auch Zwischenformen möglich sind. Ecken und Kanten sind vorteilhafterweise abgerundet. Runde Tabletten weisen vorzugsweise einen Durchmesser von 30 mm bis 40 mm auf. Insbesondere die Größe von eckig oder quaderförmig gestalteten Tabletten, welche überwiegend über die Dosiervorrichtung beispielsweise der Geschirrspülmaschine eingebracht werden, ist abhängig von der Geometrie und dem Volumen dieser Dosiervorrichtung. Beispielhaft bevorzugte Ausführungsformen weisen eine Grundfläche von (20 bis 30 mm) x (34 bis 40 mm), insbesondere von 26x36 mm oder von 24x38 mm auf.

Flüssige oder pastöse erfindungsgemäße Mittel in Form von übliche Lösungsmittel, insbesondere Wasser, enthaltenden Lösungen werden in der Regel durch einfaches Mischen der Inhaltsstoffe, die in Substanz oder als Lösung in einen automatischen Mischer gegeben werden können, hergestellt.

In einer bevorzugten Ausführungsform ist ein Mittel, in das erfindungsgemäß zu verwendender Wirkstoff eingearbeitet wird, flüssig und enthält 1 Gew.-% bis 15 Gew.-%, insbesondere 2 Gew.-% bis 10 Gew.-% nichtionisches Tensid, 2 Gew.-% bis 30 Gew.-%, insbesondere 5 Gew.-% bis 20 Gew.-% synthetisches Aniontensid, bis zu 15 Gew.-%, insbesondere 2 Gew.-% bis 12,5 Gew.-% Seife, 0,5 Gew.-% bis 5 Gew.-%, insbesondere 1 Gew.-% bis 4 Gew.-% organischen Builder, insbesondere Polycarboxylat wie Citrat, bis zu 1,5 Gew.-%, insbesondere 0,1 Gew.-% bis 1 Gew.-% Komplexbildner für Schwermetalle, wie Phosphonat, und neben gegebenenfalls enthaltenem Enzym, Enzymstabilisator, Farb- und/oder Duftstoff Wasser und/oder wassermischbares Lösungsmittel.

In einer weiteren bevorzugten Ausführungsform ist ein Mittel, in das erfindungsgemäß zu verwendender Wirkstoff eingearbeitet wird, teilchenförmig und enthält bis zu 25 Gew.-%, insbesondere 5 Gew.-% bis 20 Gew.-% Bleichmittel, insbesondere Alkalipercarbonat, bis zu 15 Gew.-%, insbesondere 1 Gew.-% bis 10 Gew.-% Bleichaktivator, 20 Gew.-% bis 55 Gew.-% anorganischen Builder, bis zu 10 Gew.-%, insbesondere 2 Gew.-% bis 8 Gew.-% wasserlöslichen organischen Builder, 10 Gew.-% bis 25 Gew.-% synthetisches Aniontensid, 1 Gew.-% bis 5 Gew.-% nichtionisches Tensid und bis zu 25 Gew.-%, insbesondere 0,1 Gew.-% bis 25 Gew.-% anorganische Salze, insbesondere Alkalicarbonat und/oder -hydrogencarbonat.

Beispiele

Beispiel 1: Herstellung von Poly(Vinylpyrrolidon-co-N,N-dimethylacrylamid) (E1)

6,5 g N,N-Dimethylacrylamid (65,6 mmol), 65,9 g N-Vinylpyrrolidon (592,8 mmol) und 11,8 g Azobisisobutyronitril (AIBN) (72,1 mmol) wurden in 1330 ml Isopropanol gelöst. Die Lösung wurde mittels Durchleiten von Stickstoff von Sauerstoff befreit. Anschließend wurde für 2 Tage bei 65°C gerührt. Dann wurden weitere 11,8 g AIBN zugegeben und die Reaktionsmischung wurde erneut entgast. Es wurde für weitere 6 Tage bei 65°C gerührt. Dann wurde die Reaktion durch Zutritt von Sauerstoff gestoppt. Das Lösungsmittel wurde am Rotationsverdampfer abgezogen, das Reaktionsprodukt in 750 ml Wasser aufgenommen und durch Filtration von unlöslichen Bestandteilen befreit. Anschließend wurde das Copolymer durch Gefriertrocknung isoliert.

Ausbeute: 66,4 g (91,7% d. Th)

Beispiel 2: Bestimmung des Aggregationsparameters $X_{ag}$ über die statische Oberflächenspannung

Bei 25 °C wurde unter Verwendung eines TE3-Ring/Plattentensiometers von Lauda die Oberflächenspannung $\gamma$ einer auf pH 8,5 eingestellten wässrigen Lösung von 0,2 g/l linearem Alkylbenzolsufonat (LAS; Disponil® LDBS 55) gemessen. Die Messung wurde mit ansonsten gleichen Lösungen, die aber zusätzlich 0,12 g/l des jeweils zu untersuchenden Polymers enthielten, wiederholt. Der Aggregationsparameter $X_{ag}$ wurde bestimmt, indem der Messwert des Systems ohne Polymer von dem des Systems mit Polymer subtrahiert wurde.

$$X_{ag} = \gamma_1 \text{ (Tensid + Polymer)} - \gamma_2 \text{ (Tensid)}$$

Getestet wurde das in Beispiel 1 hergestellten Polymere E1. Es wurde der in der folgenden Tabelle 1 angegebene Aggregationsparameter ermittelt:

Tabelle 1: Aggregationsparameter des Tensid-Polymer Systeme

| System | $X_{ag}$ |
|---|---|
| LAS + E1 | 3,4 |

Die Messung der Oberflächenspannung in Polymeranwesenheit und -abwesenheit wurde auch in einer Alkylbenzolsufonat-haltigen Waschmittelrahmenformulierung durchgeführt. Auch dort war die Wechselwirkung des Polymers klar erkennbar. Dies belegt, dass die Ausbildung des reinigungsaktiven Aggregats kein auf das isolierte Tensid-Polymer-System beschränktes Phänomen ist. Es handelt sich vielmehr um einen anwendungsrelevanten Effekt der in der Reinigungsanwendung eine verbesserte Leistung bewirkt.

Beispiel 3

Tabelle 3: Waschmittelzusammensetzungen (Angaben in Gew.-%)

| | A | B | C | D | E | F | G | H |
|---|---|---|---|---|---|---|---|---|
| C9-13-Alkylbenzolsulfonat, Na-Salz | 9 | 10 | 6 | 7 | 5 | 15 | 15 | 9 |
| C12-18-Fettalkohol mit 7 EO | 8 | 9 | 6 | 7 | 5 | 6 | 11 | 10 |
| C12-14-Fettalkoholsulfat mit 2EO | - | - | 8 | 7 | 10 | 2 | 2 | 5 |
| C12-18-Fettsäure, Na-Salz | 4 | 3 | 3 | 3 | 4 | 2 | 4 | 7 |
| Zitronensäure | 2 | 3 | 3 | 2 | 2 | 2 | 2 | 3 |
| Natriumhydroxid, 50 % | 3 | 3 | 2 | 3 | 3 | 3 | 3 | 4 |
| Borsäure | 1 | 1 | 1 | 1 | 1 | 1 | 1 | 1 |
| Enzyme (Amylase, Protease, Cellulase) | + | + | + | + | + | + | + | + |
| Parfüm | 1 | 0,5 | 0,5 | 1 | 1 | 1 | 1 | 1 |
| Propandiol | - | - | - | - | - | 5 | 5 | - |
| Ethanol | 1,5 | 1,5 | 1,5 | 1,5 | 1,5 | 1,5 | 1,5 | 5 |
| PVA/Maleinsäure-Copolymer | 0,1 | - | 0,1 | - | - | - | - | - |
| Optischer Aufheller | - | 0,1 | - | 0,1 | 0,2 | 0,2 | 0,2 | 0,2 |
| Trübungsmittel | 0,2 | - | - | - | - | - | - | - |
| Phosphonsäure, Na-Salz | 0,5 | 0,5 | 0,5 | 0,5 | 0,5 | 0,5 | 0,5 | 0,5 |
| erfindungswesentliches Polymer | 2 | 2 | 2 | 2 | 2 | 2 | 2 | 2 |
| Wasser | auf 100 | | | | | | | |

Beispiel 4: Waschversuche

Haushaltswaschmaschinen (Miele® W 1514) wurden mit 3,5 kg sauberer Begleitwäsche sowie mit mit standardisierten Anschmutzungen (A: Schokoladenmilch/Ruß; B: Brombeersaft; C: Schokoladenpuddding; D: Heidelbeersaft) versehenen Testtextilien aus Baumwolle und Schmutzballast beladen. 75 ml des in Beispiel 3 aufgeführten Waschmittels C mit dem in Beispiel 1 hergestellten Polymer E1 wurden eindosiert und es wurde bei 40°C gewaschen. Nach hängender Trocknung und Mangeln der Testtextilien wurde deren Weißgrad spektralphotometrisch (Minolta® CR200-1) bestimmt. In der nachfolgenden Tabelle 4 sind die Differenzen der Remissionswerte zum ansonsten gleich zusammengesetzten Waschmittel ohne erfindungswesentliches Polymer als Mittelwerte aus 6 Bestimmungen sowie die Fehler bei der 6-fach Bestimmung (HSD) angegeben.

Tabelle 4: Waschergebnisse (Angaben in %)

| Polymer \ Anschmutzung | E1 | HSD |
|---|---|---|
| A | 5,5 | 2,6 |
| B | 4,9 | 3,4 |
| C | 2,7 | 1,8 |
| D | 2,8 | 1,0 |

Das Waschmittel mit einem erfindungsgemäß zu verwendenden Wirkstoff zeigte eine deutlich bessere Primärwaschleistung als das ansonsten gleich zusammengesetzte Mittel, dem dieser fehlte.

## Patentansprüche

**1.** Verwendung von durch Copolymerisation von N-Vinylpyrrolidon mit ethylenisch ungesättigten Verbindungen, die eine Amidfunktion aufweisen, erhältlichen Polymeren, die einen Aggregationsparameter $X_{ag}$ mit $X_{ag}$ > 1 mN/m aufweisen, zur Verstärkung der Primärwaschkraft von Wasch- oder Reinigungsmitteln beim Waschen von Textilien oder beim Reinigen harter Oberflächen gegenüber Anschmutzungen.

**2.** Verwendung nach Anspruch 1, **dadurch gekennzeichnet, dass** das Polymer einen Aggregationsparameter $X_{ag}$ mit $X_{ag}$ > 2,5 mN/m, insbesondere $X_{ag}$ im Bereich von 3 mN/m bis 5 mN/m, aufweist.

**3.** Verwendung nach Anspruch 1 oder 2, **dadurch gekennzeichnet, dass** das Polymer ausgewählt wird aus den durch Copolymerisation von N-Vinylpyrrolidon mit einem zweiten Monomer, ausgewählt aus der Gruppe umfassend Acrylamid, Methacrylamid, N-Alkylacrylamid, N-Alkylmethacrylamid, N,N-Dialkylacrylamid und N,N-Dialkylmethacrylamid, in denen die Alkylgruppen 1 bis 10 C-Atome, insbesondere 1 bis 4 C-Atome aufweisen, sowie Mischungen aus mindestens 2 dieser Verbindungen zugänglichen Polymeren.

**4.** Verwendung nach einem der Ansprüche 1 bis 3, **dadurch gekennzeichnet, dass** das Polymer N-Vinylpyrrolidon und das ethylenisch ungesättigte Monomer mit Amidfunktion im Gewichtsverhältnis im Bereich von 99:1 bis 50:50, insbesondere von 98:2 bis 55:45 aufweist.

**5.** Verwendung nach einem der Ansprüche 1 bis 4, **dadurch gekennzeichnet, dass** das Polymer ein mittleres Molekulargewicht in Bereich von 1000 g/mol bis 50000 g/mol, insbesondere von 1100 g/mol bis 150000 g/mol aufweist.

**6.** Verwendung nach einem der Ansprüche 1 bis 5, **dadurch gekennzeichnet, dass** man das Polymer einer wasch- oder reinigungsmittelhaltigen Flotte zusetzt oder als Bestandteil eines Wasch- oder Reinigungsmittels in die Flotte einbringt.

**7.** Verfahren zum Entfernen von insbesondere bleich- oder enzymsensitiven Anschmutzungen von Textilien oder harten Oberflächen, bei dem ein Wasch- oder Reinigungsmittel und ein durch Copolymerisation von N-Vinylpyrrolidon mit ethylenisch ungesättigten Verbindungen, die eine Amidfunktion aufweisen, ausgewählt aus der Gruppe umfassend Acrylamid, Methacrylamid, N-Alkylacrylamid, N-Alkylmethacrylamid, N,N-Dialkylacrylamid und N,N-Dialkylmethacrylamid, in denen die Alkylgruppen 1 bis 10 C-Atome, insbesondere 1 bis 4 C-Atome aufweisen, sowie Mischungen aus mindestens 2 dieser Verbindungen erhältliches Polymer, das einen Aggregationsparameter $X_{ag}$ mit $X_{ag}$ > 1 mN/m aufweist, zum Einsatz kommen.

**8.** Verfahren nach Anspruch 7, **dadurch gekennzeichnet, dass** es manuell oder maschinell, insbesondere mit Hilfe einer Haushaltswaschmaschine oder Geschirrspülmaschine, ausgeführt wird.

**9.** Wasch- oder Reinigungsmittel, enthaltend ein durch Copolymerisation von N-Vinylpyrrolidon mit ethylenisch ungesättigten Verbindungen, die eine Amidfunktion aufweisen, ausgewählt aus der Gruppe umfassend Acrylamid, Methacrylamid, N-Alkylacrylamid, N-Alkylmethacrylamid, N,N-Dialkylacrylamid und N,N-Dialkylmethacrylamid, in denen die Alkylgruppen 1 bis 10 C-Atome, insbesondere 1 bis 4 C-Atome aufweisen, sowie Mischungen aus mindestens 2 dieser Verbindungen erhältliches Polymer, das insbesondere einen Aggregationsparameter $X_{ag}$ mit $X_{ag}$ > 1 mN/m aufweist, und synthetisches Aniontensid vom Sulfat- und/oder Sulfonattyp.

**10.** Mittel nach Anspruch 9, **dadurch gekennzeichnet, dass** es das Polymer in Mengen von 0,1 Gew.-% bis 10 Gew.-%, insbesondere 0,5 Gew.-% bis 2 Gew.-% enthält.

## Claims

**1.** The use of polymers which can be obtained by means of copolymerization of N-vinylpyrrolidone with ethylenically unsaturated compounds having an amide function, and which comprise an aggregation parameter $X_{ag}$, in which $X_{ag} > 1$ mN/m, for increasing the primary detergency of washing or cleaning agents when washing textiles or when cleaning hard surfaces of dirt.

**2.** The use according to claim 1, **characterized in that** the polymer has an aggregation parameter $X_{ag}$, in which $X_{ag} > 2.5$ mN/m, in particular $X_{ag}$ being in the range of from 3 mN/m to 5 mN/m.

**3.** The use according to claim 1 or 2, **characterized in that** the polymer is selected from the polymers which can be obtained by means of copolymerization of N-vinylpyrrolidone with a second monomer, selected from the group comprising acrylamide, methacrylamide, N-alkylacrylamide, N-alkylmethacrylamide, N,N-dialkylacrylamide and N,N-dialkylmethacrylamide, in which the alkyl groups comprise from 1 to 10 C atoms, in particular from 1 to 4 C atoms, and mixtures of at least two of said compounds.

**4.** The use according to one of claims 1 to 3, **characterized in that** the polymer contains N-vinylpyrrolidone and the ethylenically unsaturated monomer having an amide function in a weight ratio in the range of from 99:1 to 50:50, in particular from 98:2 to 55:45.

**5.** The use according to one of claims 1 to 4, **characterized in that** the polymer has an average molecular weight in the range of from 1000 g/mol to 50,000 g/mol, in particular from 1100 g/mol to 150,000 g/mol.

**6.** The use according to one of claims 1 to 5, **characterized in that** the polymer is added to a liquor containing a washing or cleaning agent or is introduced as a component of a washing or cleaning agent into the liquor.

**7.** A method for removing in particular bleach- or enzyme-sensitive dirt from textiles or hard surfaces, in which a washing or cleaning agent and a polymer are used, which polymer can be obtained by means of copolymerization of N-vinylpyrrolidone with ethylenically unsaturated compounds having an amide function and selected from the group comprising acrylamide, methacrylamide, N-alkylacrylamide, N-alkylmethacrylamide, N,N-dialkylacrylamide and N,N-dialkylmethacrylamide, in which the alkyl groups comprise from 1 to 10 C atoms, in particular from 1 to 4 C atoms, and mixtures of at least two of said compounds, and which polymer has an aggregation parameter $X_{ag}$, in which $X_{ag} > 1$ mN/m.

**8.** The method according to claim 7, **characterized in that** it is carried out manually or mechanically, in particular using a domestic washing machine or dishwasher.

**9.** A washing or cleaning agent containing a polymer which can be obtained by means of copolymerization of N-vinylpyrrolidone with ethylenically unsaturated compounds having an amide function and selected from the group comprising acrylamide, methacrylamide, N-alkylacrylamide, N-alkylmethacrylamide, N,N-dialkylacrylamide and N,N-dialkylmethacrylamide, in which the alkyl groups comprise from 1 to 10 C atoms, in particular from 1 to 4 C atoms, and mixtures of at least two of said compounds, and which polymer has in particular an aggregation parameter $X_{ag}$, in which $X_{ag} > 1$ mN/m, and synthetic anionic surfactant of the sulfate and/or sulfonate type.

**10.** The agent according to claim 9, **characterized in that** it contains the polymer in amounts of from 0.1 wt.% to 10 wt.%, in particular from 0.5 wt.% to 2 wt.%.

## Revendications

**1.** Utilisation de polymères qui peuvent être obtenus par copolymérisation de N-vinylpyrrolidone avec des composés à insaturation éthylénique ayant une fonctionnalité amide et qui ont un paramètre d’agrégation $X_{ag}$ avec $X_{ag} > 1$ mN/m, pour améliorer le pouvoir lavant primaire d’agents de lavage ou de nettoyage lors du lavage de textiles ou lors du nettoyage de surfaces dures par rapport à des salissures.

**2.** Utilisation selon la revendication 1, **caractérisée en ce que** le polymère a un paramètre d'agrégation $X_{ag}$ avec $X_{ag}$ > 2,5 mN/m, en particulier $X_{ag}$ dans la gamme de 3 mN/m à 5 mN/m.

**3.** Utilisation selon la revendication 1 ou 2, **caractérisée en ce que** le polymère est choisi parmi les polymères qui peuvent être obtenus par copolymérisation de N-vinylpyrrolidone avec un second monomère choisi dans le groupe comportant l'acrylamide, le méthacrylamide, un N-alkylacrylamide, un N-alkylméthacrylamide, un N,N-dialkylacrylamide et un N,N-dialkylméthacrylamide, dans lesquels les groupes alkyles ont de 1 à 10 atomes de carbone, en particulier de 1 à 4 atomes de carbone, et des mélanges d'au moins deux de ces composés.

**4.** Utilisation selon l'une des revendications 1 à 3, **caractérisée en ce que** le polymère comporte de la N-vinylpyrrolidone et le monomère éthyléniquement insaturé ayant une fonctionnalité amide dans le rapport en poids dans la gamme allant de 99:1 à 50:50, en particulier de 98:2 à 55:45.

**5.** Utilisation selon l'une des revendications 1 à 4, **caractérisée en ce que** le polymère a un poids moléculaire moyen dans la gamme de 1000 g/mol à 50000 g/mol, notamment de 1100 g/mole à 150000 g/mol.

**6.** Utilisation selon l'une des revendications 1 à 5, **caractérisée en ce que** l'on ajoute le polymère à une lessive contenant un agent de lavage ou de nettoyage ou comme constituant d'un agent de lavage ou de nettoyage dans la lessive.

**7.** Procédé d'élimination de salissures, en particulier sensibles au blanchiment ou à des enzymes, de textiles ou de surfaces dures, dans lequel on utilise un agent de lavage ou de nettoyage et un polymère qui peut être obtenu par copolymérisation de N-vinylpyrrolidone avec des composés à insaturation éthylénique ayant une fonction amide choisis dans le groupe comportant l'acrylamide, le méthacrylamide, un N-alkylacrylamide, un N-alkylméthacrylamide, un N,N-dialkylacrylamide et un N,N-dialkylméthacrylamide dans lesquels les groupes alkyles ont de 1 à 10 atomes de carbone, en particulier de 1 à 4 atomes de carbone, et des mélanges d'au moins deux de ces composés, et qui a un paramètre d'agrégation $X_{ag}$ avec $X_{ag}$ > 1 mN/m.

**8.** Procédé selon la revendication 7, **caractérisé en ce qu'**il est mis en oeuvre manuellement ou en machine, notamment à l'aide d'un lave-linge ménager ou d'un lave-vaisselle.

**9.** Agent de lavage ou de nettoyage contenant un polymère qui peut être obtenu par copolymérisation de N-vinylpyrrolidone avec des composés à insaturation éthylénique ayant une fonction amide choisis dans le groupe comportant l'acrylamide, le méthacrylamide, un N-alkylacrylamide, un N-alkylméthacrylamide, un N,N-dialkylacrylamide et un N,N-dialkylméthacrylamide, dans lesquels les groupes alkyles de 1 à 10 atomes de carbone, en particulier de 1 à 4 atomes de carbone, et des mélanges d'au moins deux de ces composés et qui a en particulier un paramètre d'agrégation $X_{ag}$ avec $X_{ag}$ > 1 mN/m, et un tensioactif anionique synthétique du type sulfate et/ou sulfonate.

**10.** Agent selon la revendication 9, **caractérisé en ce qu'**il contient le polymère dans des quantités allant de 0,1 % en poids à 10 % en poids, en particulier de 0,5 % en poids à 2 % en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011001173 A1
- WO 9729139 A1
- EP 0181204 A2
- EP 0181205 A2
- US 20020177542 A
- WO 2004014326 A1
- DE 2412837
- EP 0164514 A